**Europäisches Patentamt**

**European Patent Office**

**Office européen des brevets**

(19)

(11) Veröffentlichungsnummer: **0 047 234**

**A2**

(12) # EUROPÄISCHE PATENTANMELDUNG

(21) Anmeldenummer: **81890129.0**

(22) Anmeldetag: **21.07.81**

(51) Int. Cl.³: **B 21 B 31/07**
**F 16 C 19/28**

(30) Priorität: **28.08.80 AT 4364/80**

(43) Veröffentlichungstag der Anmeldung:
**10.03.82 Patentblatt 82/10**

(84) Benannte Vertragsstaaten:
**CH DE FR IT LI**

(71) Anmelder: **RISTA-Drahtwerk, Hufnagl & Co.**
**Gesellschaft m.b.H.**
**Friedrichstrasse 2**
**A-1011 Wien(AT)**

(72) Erfinder: **Taschler, Walther**
**Hauptstrasse 38**
**A-2722 Winzendorf(AT)**

(74) Vertreter: **Kretschmer, Adolf, Dipl-Ing.**
**Schottengasse 3a**
**A-1014 Wien(AT)**

(54) **Wälzlageranordnung.**

(57) Die Wälzlageranordnung weist einen Wälzlagerinnenring (4) und einen Wälzlageraußenring (3) auf, zu welchen Wälzkörper (5) angeordnet sind. Der Wälzlagerinnenring (4) und der Wälzlageraußenring (3) sind mit zwei relativ zueinander drehbaren Bauteilen verbunden. Zur Vergleichmäßigung der Lagerbelastung bei derartigen Anordnungen, bei welchen die Belastung im Betrieb auf einen dieser beiden Bauteile stets in gleicher Richtung wirkt, ist derjenige Wälzlagerring mit demjenigen Bauteil verdrehbar verbunden, auf welchen die Lagerbelastung stets in gleicher Richtung wirkt. Um die freie Drehbarkeit dieses Wälzlagerringes (3,4) zu verbessern, wird zwischen demjenigen Bauteil, mit welchen der Wälzlagerring (3,4) verdrehbar verbunden ist, und dem Wälzlagerring (3,4) ein Schmiermittelfilm aufrecht erhalten, wofür eine Schmiermittelzuführungsbohrung (7) vorgesehen ist.

FIG.1

EP 0 047 234 A2

Wälzlageranordnung.

Die Erfindung bezieht sich auf eine Wälzlageranordnung, bei welcher die Wälzkörper zwischen einem Wälzlagerinnenring und einem Wälzlageraußenring angeordnet sind und Wälzlagerinnenring und Wälzlageraußenring mit zwei relativ zueinander drehbaren Bauteilen verbunden sind, wobei im Betrieb die Lagerbelastung auf einen dieser beiden Bauteile stets in im wesentlichen gleicher Richtung wirkt. Solche Belastungsfälle wirken sich äußerst ungünstig auf die Wälzlagerringe aus. Beim Walzen muß von Wälzlagern beispielsweise ein sehr hoher Walzdruck aufgenommen werden. Wenn beispielsweise Lagerzapfen von Walzen in Wälzlagern am Walzenständer gelagert sind, so wirkt der Walzdruck auf den im Ständer angeordneten Walzlageraußenring immer in der gleichen Richtung. Wenn bei Kaltwalzen der Wälzlageraußenring mit dem Walzenkörper verbunden ist und der Wälzlagerinnenring auf einer feststehenden Achse sitzt, so wirkt der Walzdruck auf diesen Wälzlagerinnenring immer in der gleichen Richtung. Bei den bekannten Anordnungen dieser Art wird somit nur ein Teil der Lauffläche desjenigen Wälzlagerringes, auf welchen die Lagerbelastung immer in der gleichen Richtung wirkt, übermäßig beansprucht und es tritt auf diesem Teil des Wälzlagerringes durch die Dauerbelastung eine Grübchenbildung auf, die zur Unbrauchbarkeit des Lagers führen kann. Die Erfindung zielt nun darauf ab, bei einer solchen Wälzlageranordnung Dauerschäden weitgehend herabzusetzen und zu vermeiden, und die Erfindung besteht im wesentlichen darin, daß der mit demjenigen Bauteil, auf welchen die Lagerbelastung in gleicher Richtung wirkt, verbundene Wälzlagerring mit diesem verdrehbar verbunden ist. Dadurch tritt im Betrieb eine Verdrehung des Wälzlagerringes relativ zu dem Bauteil, an welchem er gelagert ist, ein. Es werden im Laufe des Betriebes immer wieder andere Teile der Lauffläche dieses Wälzlagerringes belastet und es wird dadurch die Lebensdauer dieses Wälzlagerringes und damit des gesamten Wälzlagers um ein Vielfaches erhöht.

Gemäß einer bevorzugten Ausführungsform, welche für die Lagerung von Kaltwalzen geeignet ist, ist der Wälzlagerinnenring drehbar auf einer ortsfesten Achse gelagert. Solche Kaltwalzen werden je nach Verformungsgrad und Verformbarkeit des Stahles stoßweise belastet. Diese Belastungsstöße werden von der Walze über den Wälzkörper auf das Wälzlager übertragen. Es ist überdies die Lauffläche des Wälzlagerinnenringes infolge des kleineren Durchmessers wesentlich kleiner als die Lauffläche des Wälzlageraußenringes. Die Belastung des Wälzlagerinnenringes ist daher auf eine kleinere Fläche reduziert und es wirkt sich daher bei solchen Wälzlagern für Kaltwalzen die Schädigung der Lauffläche des Wälzlagerinnenringes im besonderen Maße aus.

Gemäß einer weiteren bevorzugten Ausführungsform der Erfindung wird zwischen dem Wälzlagerring und dem Bauteil, mit welchem er verdrehbar verbunden ist, ein Schmiermittelfilm aufrechterhalten. Dadurch wird die Verdrehung des Wälzlagerringes gegenüber dem Bauteil, an welchem er gelagert ist, im besonderen Maße begünstigt. Der Wechsel der belasteten Stellen des Wälzlagerringes erfolgt daher schneller und die Dauerbelastung der betreffenden Stelle wird auf einen kürzeren Zeitraum reduziert. Überdies hat auch der Schmiermittelfilm einen gewissen Dämpfungseffekt für die Stöße. Vorzugsweise ist der Wälzlagerring an dem Bauteil, mit welchem er verdrehbar verbunden ist, mit Laufsitzpassung gelagert.

In der Zeichnung ist die Erfindung an Hand eines Ausführungsbeispieles, welches ein Kaltwalzlager zeigt, schematisch veranschaulicht.

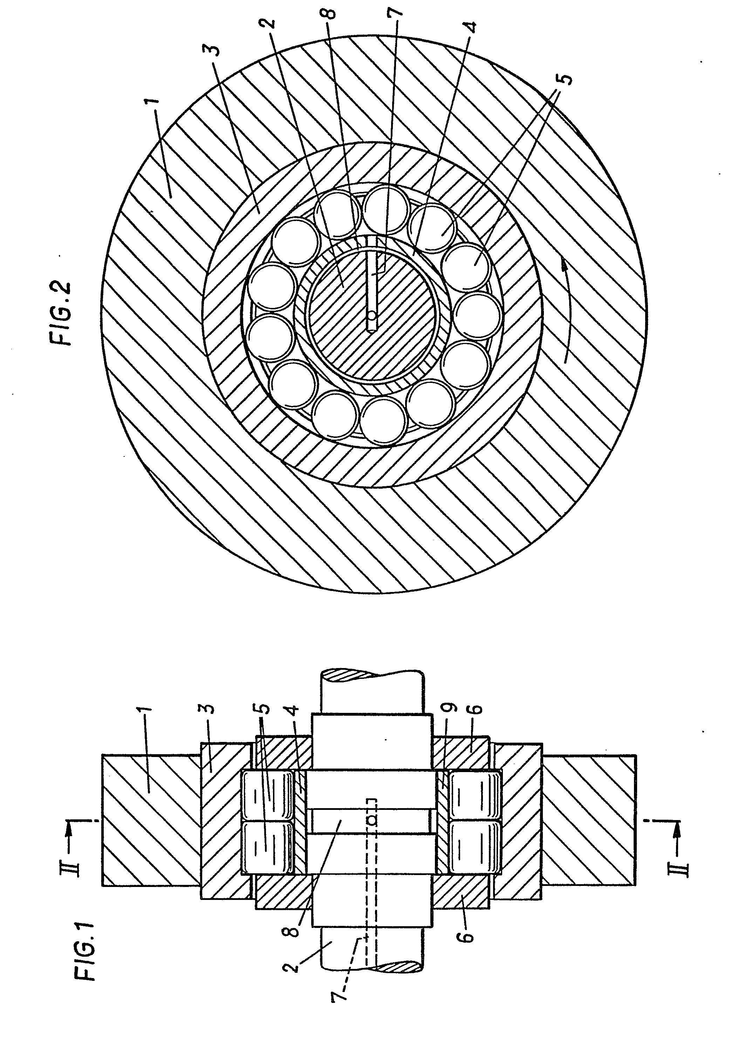

Fig. 1 zeigt einen Axialschnitt durch das Lager nach Linie I-I der Fig. 2. Fig. 2 zeigt einen Radialschnitt durch das Lager nach Linie II-II der Fig. 1.

1 ist die Kaltwalze bzw. Druckrolle und 2 die feststehende Achse. 3 ist der Wälzlageraußenring und 4 der Wälzlagerinnenring. 5 sind die von Rollen gebildeten Wälzkörper. 6
sind Scheiben.

Der Wälzlagerinnenring ist auf der Achse 2 verdrehbar, beispielsweise mit Laufsitz gelagert. 7 ist eine Schmierbohrung
in der Achse, welche in eine Schmiernut 8 mündet. Auf diese
Weise wird im Spalt 9 zwischen dem Wälzlagerinnenring 4 und
der Achse 2 ein Schmiermittelfilm aufrechterhalten.

1981 07 08 sm

- 4 -

Patentansprüche:

1. Wälzlageranordnung, bei welcher die Wälzkörper (5) zwischen einem Wälzlagerinnenring (4) und einem Wälzlageraußenring (3) angeordnet sind und Wälzlagerinnenring (4) und Wälzlageraußenring (3) mit zwei relativ zueinander drehbaren Bauteilen verbunden sind, wobei im Betrieb die Lagerbelastung auf einen dieser beiden Bauteile stets im wesentlichen gleicher Richtung wirkt, dadurch gekennzeichnet, daß der mit demjenigen Bauteil, auf welchen die Lagerbelastung in gleicher Richtung wirkt, verbundene Wälzlagerring (3,4) mit diesem verdrehbar verbunden ist.

2. Wälzlageranordnung nach Anspruch 1, insbesondere für Kaltwalzen, dadurch gekennzeichnet, daß der Wälzlagerinnenring (4) drehbar auf einer ortsfesten Achse (2) gelagert ist.

3. Wälzlageranordnung nach Anspruch 1 oder 2, dadurch gekennzeichnet, daß zwischen dem Wälzlagerring (3,4) und dem Bauteil, mit welchem er verdrehbar verbunden ist, ein Schmiermittelfilm aufrechterhalten ist.

4. Wälzlageranordnung nach Anspruch 1, 2 oder 3, dadurch gekennzeichnet, daß in den Spalt zwischen dem Wälzlagerring (3,4) und dem Bauteil, mit welchem dieser verdrehbar verbunden ist, eine Schmiermittelzuführungsbohrung (7) mündet.

5. Wälzlageranordnung nach einem der Ansprüche 1 bis 4, dadurch gekennzeichnet, daß der Wälzlagerring (3,4) an dem Bauteil, mit welchem er verdrehbar verbunden ist, mit Laufsitzpassung gelagert ist.

1981 07 08 sm

FIG.1

FIG.2

0047234